Europäisches Patentamt

European Patent Office

Office européen des brevets

(11) Numéro de publication: **0 378 035**
**A1**

## (12) DEMANDE DE BREVET EUROPEEN

(21) Numéro de dépôt: **89460046.9**

(22) Date de dépôt: **29.12.89**

(51) Int. Cl.5: **F16L 37/08**

(30) Priorité: **04.01.89 FR 8900134**
**22.06.89 FR 8908501**

(43) Date de publication de la demande:
**18.07.90 Bulletin 90/29**

(84) Etats contractants désignés:
**CH DE ES FR GB IT LI SE**

(71) Demandeur: **LEGRIS SA**
**74 rue de Paris**
**F-35014 Rennes(FR)**

(72) Inventeur: **Belisaire, Daniel**
**2 avenue de la Hublais**
**F-35510 Cesson-Sevigne(FR)**

(74) Mandataire: **Dubreuil, Annie**
**Cabinet DUBREUIL Le Suffren 23 rue des**
**Peupliers**
**F-56100 Lorient(FR)**

(54) **Pince pour dispositif de raccordement instantané de conduit de fluide, et dispositifs pourvus d'une telle pince.**

(57) La pince a une configuration générale cylindrique, avec une partie de base en forme de bague (11) et des mors flexibles (14) dont les extrémités définissent une portée annulaire (14b) et présentent intérieurement une arête circulaire d'ancrage (14d).

Selon l'invention, la pince est obtenue à partir d'un flan en tôle comportant une partie centrale circulaire prolongée par des premières et secondes pattes d'axes radiaux régulièrement écartées, ledit flan étant soumis à des opérations d'emboutissage.

La pince de l'invention est de fabrication simple et bon marché, et ses caractéristiques mécaniques sont intéressantes. Par ailleurs, il est possible de lui associer un bloc en élastomère par surmoulage formant bague-poussoir et joint d'étanchéité.

L'invention concerne également des aménagements à des dispositifs de raccordement pourvus d'une telle pince.

FIG. 3

Xerox Copy Centre

# PINCE POUR DISPOSITIF DE RACCORDEMENT INSTANTANE DE CONDUIT DE FLUIDE, ET DISPOSITIFS POURVUS D'UNE TELLE PINCE

La présente invention concerne des pinces métalliques utilisées dans des dispositifs de raccordement instantané de conduit de fluide, notamment de tube semi-rigide en matière plastique. Elle concerne également des dispositifs de raccordement instantané pourvus d'une telle pince.

Un tel dispositif est décrit dans la demande de brevet français n° 2 012 796 au nom de la présente demanderesse. Sa pince a une configuration générale cylindrique, avec une partie de base en forme de bague, prolongée d'un côté par des mors flexibles dont les extrémités définissent une portée annulaire décalée vers l'extérieur et présentent intérieurement une arête circulaire à angle vif.

Actuellement, les pinces sont réalisées par décolletage, et la flexibilité des mors est obtenue par le choix du matériau, généralement du laiton, conjuguée à la présence dans les mors d'une partie de moindre épaisseur.

Un objet de la présente invention consiste à prévoir une pince obtenue par un autre procédé, de manière à en abaisser le coût et à en améliorer les performances, notamment la flexibilité des mors.

Selon l'invention, la pince est obtenue à partir d'un flan en tôle métallique comportant une partie centrale circulaire, prolongée à la périphérie par des premières pattes identiques d'axes radiaux, régulièrement écartées et dont les extrémités sont échancrées en arc de cercle, et des secondes pattes identiques d'axes radiaux, régulièrement disposées entre les premières pattes et nettement moins longues et moins larges que celles-ci, ledit flan étant soumis à des opérations d'emboutissage pour, d'une part, réaliser la partie en forme de bague de la pince dans la partie centrale du flan et, d'autre part, les mors à partir desdites premières pattes en les galbant transversalement et en les profilant longitudinalement de manière à obtenir une partie sensiblement rectiligne ou languette, une partie coudée pour former ladite portée, et une partie terminale inclinée vers le centre, dont le bord interne forme ladite arête circulaire, lesdites secondes pattes étant destinées à former autour de la pince des ergots dirigés vers l'extérieur.

L'invention sera mieux comprise à l'aide des explications qui vont suivre et des dessins joints, parmi lesquels :

la Fig. 1 est une vue de dessus d'un flan à partir duquel est obtenu une pince selon l'invention,

la Fig. 2 est une vue de bout d'une pince obtenue avec le flan de la Fig. 1,

la Fig. 3 est une vue en coupe axiale d'un raccord instantané pourvu de la pince de la Fig. 2,

la Fig. 4 est une vue en coupe axiale d'un autre raccord instantané pourvu de la pince de la Fig. 2,

la Fig. 5 est une vue en coupe axiale d'une première variante du raccord instantané de la Fig. 4,

la Fig. 6 est une vue en coupe axiale d'une seconde variante du raccord instantané de la Fig. 4,

la Fig. 7 est une demi-coupe axiale d'une pince selon l'invention, à laquelle est associé un joint d'étanchéité,

la Fig. 8 est une vue en coupe axiale d'un raccord instantané pourvu de la pince de la Fig. 7,

la Fig. 9 est une vue en coupe axiale d'un autre raccord instantané pourvu d'une variante de la pince de la Fig. 7, et

la Fig. 10 est une vue en coupe axiale d'une variante du raccord instantané de la Fig. 9.

Dans les dessins, les mêmes références numériques ont été utilisées partout pour désigner les mêmes éléments.

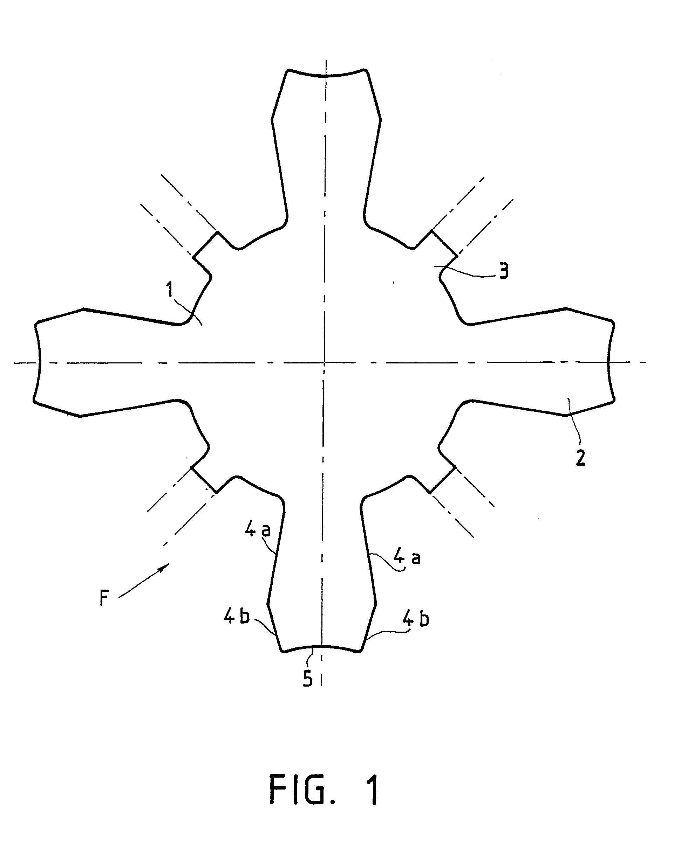

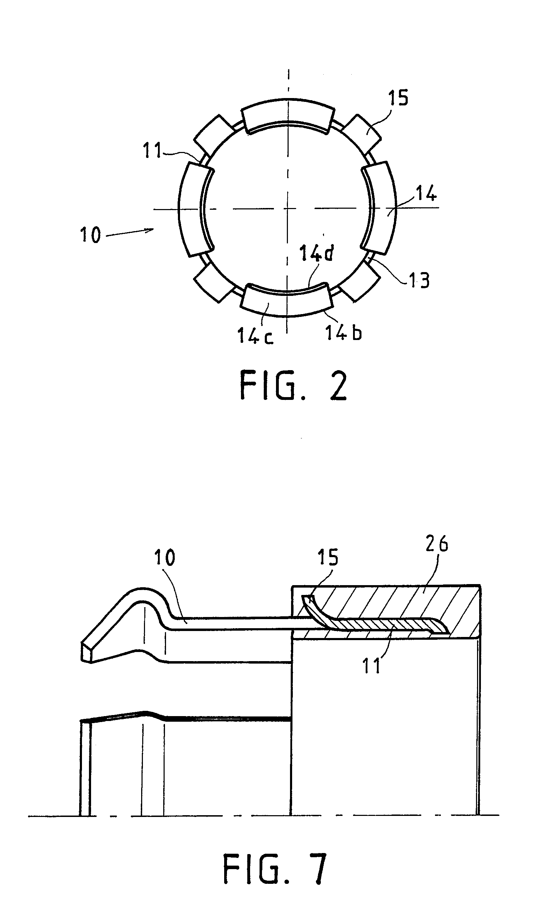

Le flan F représenté à la Fig. 1 est, de préférence, découpé dans une feuille de tôle inoxydable. Il présente une partie circulaire 1 et, à partir de celle-ci, quatre pattes principales 2, identiques et régulièrement écartées, et quatre pattes secondaires 3, identiques et régulièrement disposées entre les pattes principales 2. Les côtés latéraux de chaque patte 2 forment deux segments 4a et 4b. Les segments 4a sont divergents vers l'extérieur et les segments 4b sont convergents, de sorte que chaque patte 2 présente une zone de plus grande largeur près de son extrémité 5 qui est découpée en arc de cercle.

Les pattes secondaires 3 sont beaucoup plus courtes et moins larges que les pattes 2.

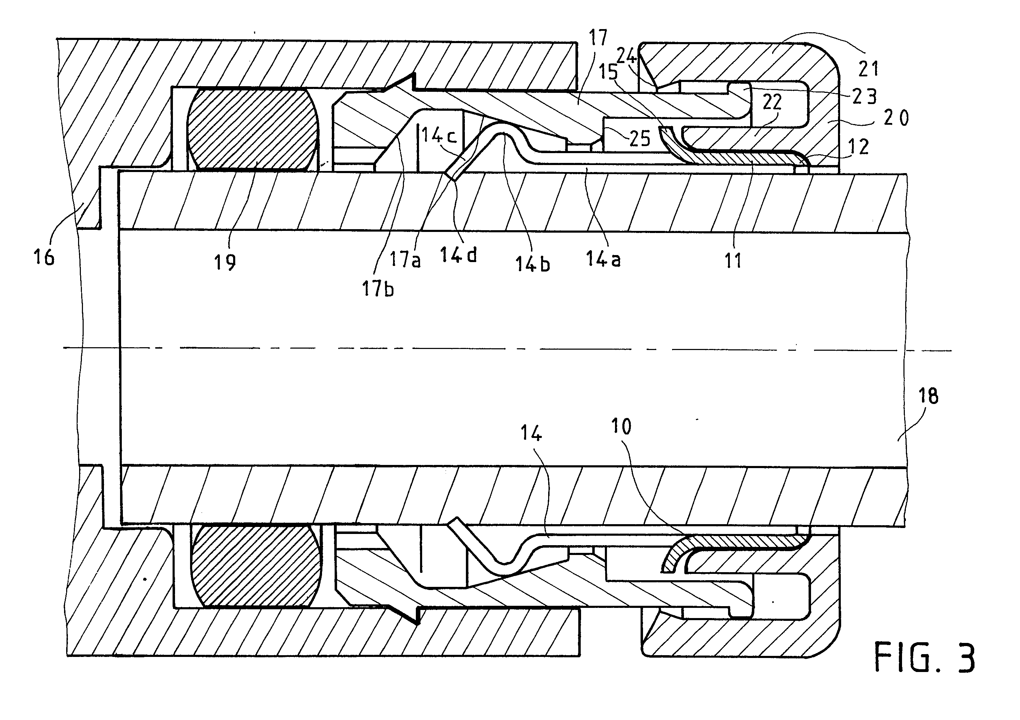

Le flan est transformé par emboutissage de manière à obtenir la pince 10 apparaissant aux Figs. 2 et 3. La pince 10 comporte une partie de base 11 en forme de bague dont le bord externe 12 est légèrement resserré vers l'intérieur, Fig. 3. Le bord interne 13 de la base 11 est prolongé par des mors 14 formés à partir des pattes 2, et galbés transversalement. Les mors 14 présentent une partie pratiquement rectiligne ou languette 14a, une partie coudée en S, sensiblement au niveau de leur zone de plus grande largeur, et formant une portée annulaire 14b décalée vers l'extérieur, puis une partie terminale 14c dirigée obliquement vers l'intérieur. L'effet conjugué du galbe des mors 14 et de la forme divergente de leurs languettes 14a les divise en une partie flexible près de la base 11 et une partie beaucoup plus rigide vers leur extrémité. Celle-ci est coupée à angle droit, de manière à former une arête circulaire interne d'accrochage 14d. Par l'inclinaison de la partie terminale 14d, on peut déterminer celle de la lèvre externe de l'arête 14d.

Entre les mors 14, font saillie vers l'extérieur, sensiblement à angle droit, des ergots 15, obtenus à partir des pattes 3.

A la Fig. 3, la pince 10 est montrée dans un raccord 16. Elle est montée à l'intérieur d'une douille 17, celle-ci étant emmanchée dans l'orifice du raccord 16. La douille 17 présente intérieurement un alésage de réception des ergots 15 et de la base 11 de la pince, une partie resserrée au niveau des languettes 14a des mors, et une zone divergente formant une portée conique 17a sur laquelle est en appui la partie coudée 14b des mors 14. Conformément à l'enseignement de la demande de brevet n° 2 012 796, l'angle au centre formé par la lèvre extérieure de l'arête 14d peut être choisi égal à environ quatre fois celui de la portée conique 17a de la douille 17, en donnant à la partie terminale 14c des mors une obliquité adéquate.

Le branchement d'un tube 18 dans le raccord 16 se fait par simple enfoncement au-delà du joint 19, Fig. 3, suivie d'une traction vers l'extérieur. Sous l'effet de celle-ci, la pince 10 est entraînée avec le tube 18, et les mors 14 se resserrent, du fait de la progression des parties coudées 14b sur la portée conique 17a de la douille 17. Les arêtes 14d pénètrent dans la matière du tube 18 et assurent un accrochage solide.

La pince 10 peut être poussée à l'intérieur du raccord 16, pour être desserrée, au moyen d'une bague-poussoir 20. La bague 20 a une section en U, de manière à coiffer le bord extérieur de la douille 17. Elle forme donc un anneau externe 21 et un anneau interne 22 pénétrant dans la douille 17. L'anneau 21 présente intérieurement une surface interne de coulissement de la bague 20 sur le bord en collerette 23 de la douille 17, le coulissement étant limité vers l'extérieur par une arête interne 24. Le pourtour interne de la bague 20 épouse la forme de la base 11 de la pince 10, en recouvrant son bord resserré 12, le bord de l'anneau 22 étant en contact avec les ergots 15. A noter que ceux-ci ont pour fonction principale de limiter le coulissement longitudinal de la pince 10 à l'intérieur du raccord 16 lors de l'enfoncement du tube 18, en butant sur l'épaulement 25, afin d'éviter l'entrée en contact des mors 14 avec la paroi 17b opposée à la portée 17a dans la douille 17, qui aurait pour effet de les resserrer.

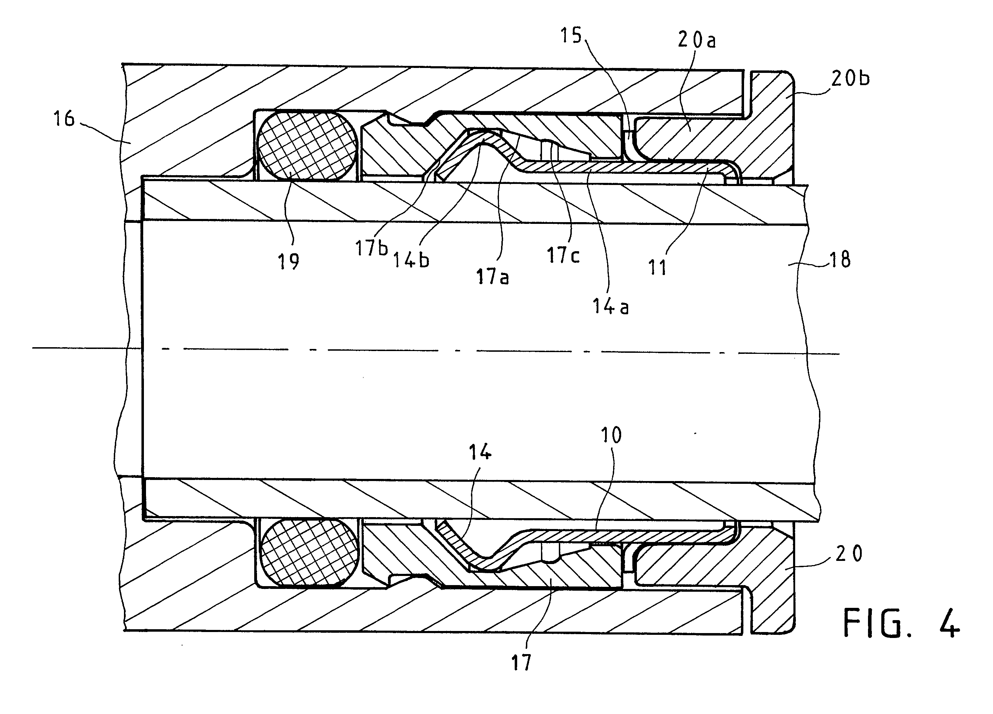

A la Fig. 4, la douille 17, fixée par encliquetage, se trouve entièrement à l'intérieur du raccord 16. Elle s'arrête juste après sa partie resserrée au niveau des languettes 14a des mors 14.

Dans l'alésage du raccord, à la suite de la douille 17, est par ailleurs engagée, apte à coulisser, la partie avant 20a de la bague-poussoir 20 dont la partie arrière 20b forme une collerette autour de l'orifice. Comme dans l'exemple de réalisation de la Fig. 3, la partie de base 11 de la pince 10 est montée dans un logement de réception de forme complémentaire de la bague-poussoir 20, les ergots 15 se trouvant en appui contre le bord avant de cette dernière. La solidarisation entre la pince 10 et la bague-poussoir 20 résulte de l'emboîtement ou, de préférence, elle est obtenue par collage.

Sur le dessin, est également représentée une rainure circulaire 17c pratiquée dans la zone divergente 17a de la douille 17. La rainure 17c est destinée à recevoir la partie coudée 14b des mors 14 lors de l'accrochage d'un tube 18, de manière à constituer une sécurité de verrouillage.

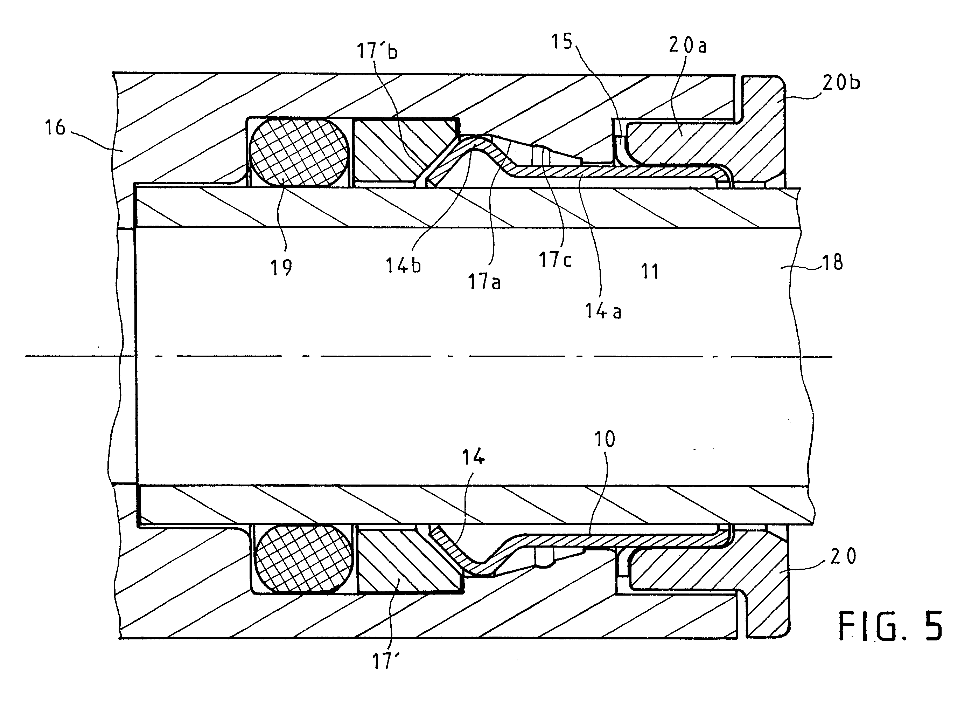

Dans le dispositif de raccordement instantané apparaissant à la Fig. 5, la douille 17 est supprimée, la paroi 17a avec la rainure 17c étant formées directement dans le corps 16. Une rondelle 17′, introduite dans le corps 16 par déformation, assure la séparation entre l'espace réservé à la pince 10 et la chambre logeant le joint 19. Le côté de la rondelle 17′ dirigé vers l'entrée du raccord définit une paroi annulaire 17′b identique à la paroi 17b de la douille 17 précédemment décrite.

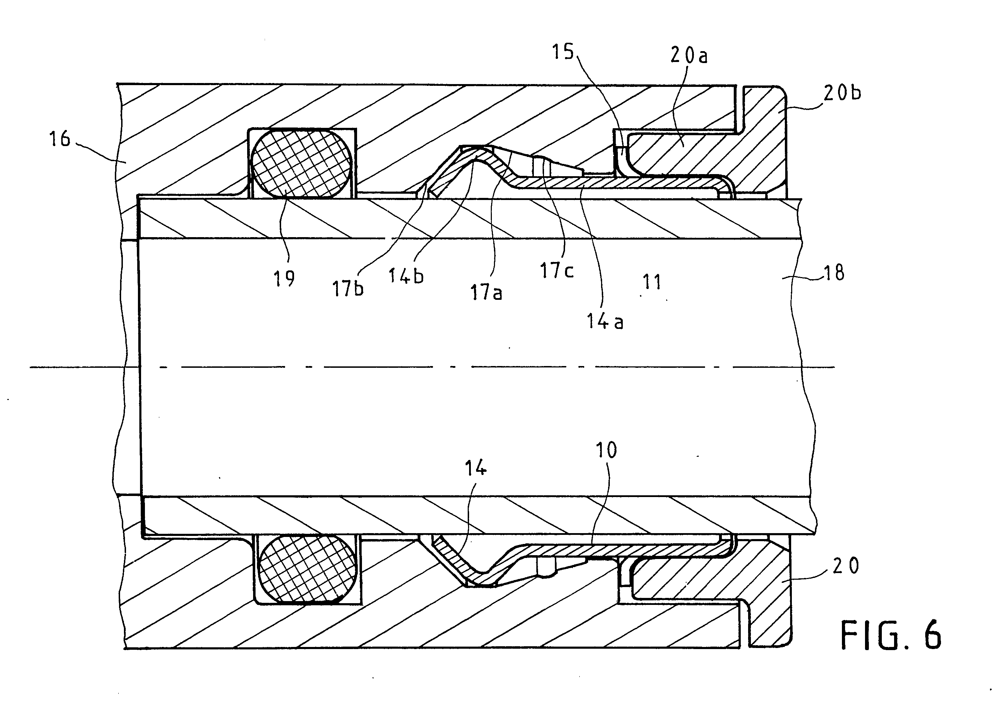

Dans la variante de la Fig. 6, la rondelle 17′ est elle-même supprimée, remplacée par un bourrelet annulaire formé à l'intérieur du corps 16.

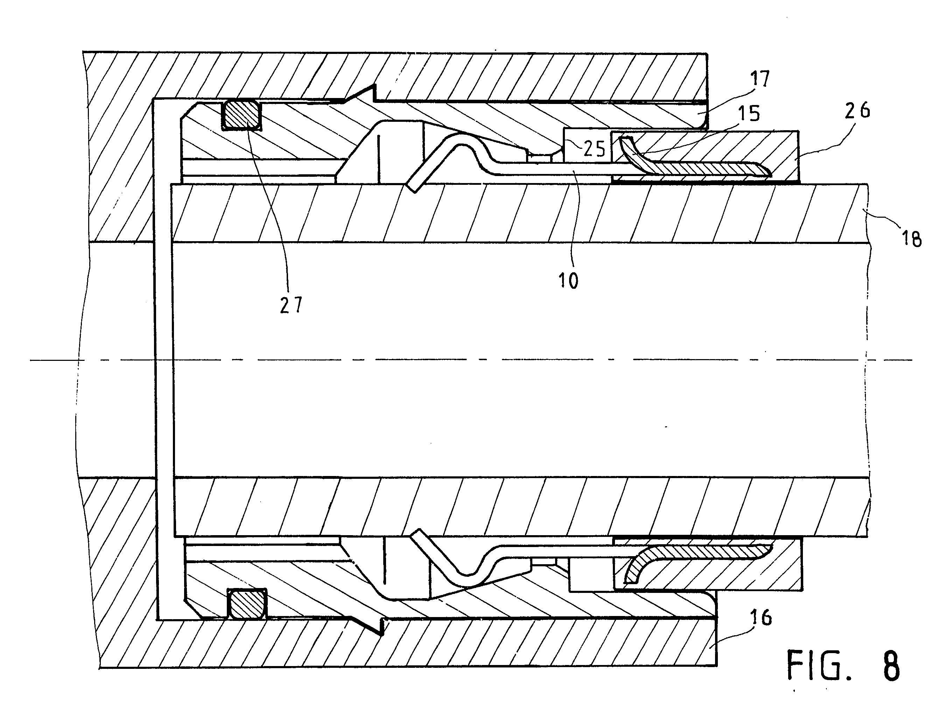

A la pince 10 apparaissant aux Figs. 7 et 8, est associé pour former un ensemble en une seule pièce un bloc 26 en élastomère. Le bloc 26 est obtenu par surmoulage sur la pince 10 qui est en tous points identique à la pince précédemment décrite, et il enrobe entièrement la partie 11 de la pince, ainsi que les ergots 15 qui servent à l'ancrage de la matière moulée. Le bloc 26 a trois fonctions : il limite par butée de son bord interne sur l'épaulement 25 la progression de la pince vers l'intérieur du raccord lors de l'enfoncement d'un tube 18; il sert de bague-poussoir pour desserrer la pince; et il établit l'étanchéité entre la paroi d'un tube 18 enfoncé dans le raccord et la paroi interne de la douille 17. Cette dernière fonction permet de simplifier la géométrie interne du raccord 16 du fait que le joint 19 représenté à la Fig. 3 est devenu superflu, seul un joint 27 étant nécessaire entre la douille 17 et la paroi de l'alésage du raccord 16 dans lequel elle est insérée.

Comme on le voit aux Figs. 7 et 8, l'épaisseur de la matière formant le bloc 26 est réduite sur la face interne de la pince 10, du fait que le diamètre interne du bloc 26 doit nécessairement être très voisin de celui de la pince. Pour certaines applications, notamment en vue d'obtenir une souplesse accrue du bloc 26 en tant que joint autour d'un tube 18, il s'avère intéressant d'augmenter ladite épaisseur de matière sur la face interne de la pince 10.

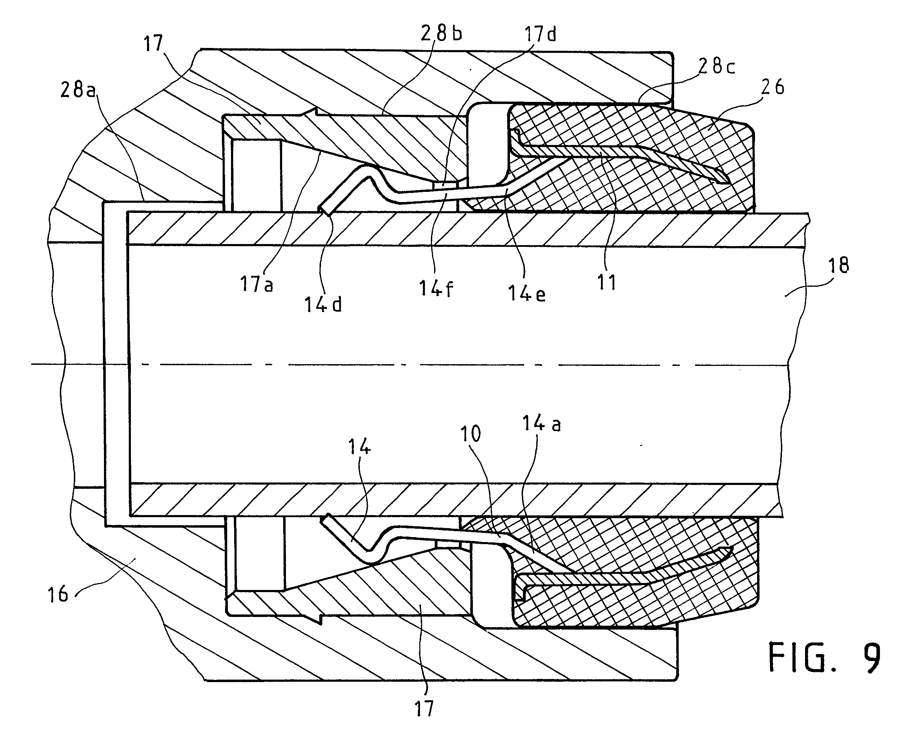

Dans ce but, la pince 10, Fig. 9, est galbée longitudinalement de manière à ce que sa partie de base 11 soit sensiblement élargie par rapport à son diamètre d'ouverture défini par les arêtes 14d aux extrémités des mors 14, et que, par conséquent, le bloc 26 surmoulé sur la pince 10 présente sensiblement autant d'épaisseur de part et d'autre de la partie de base 11. Par ailleurs, les parties rectilignes ou languettes 14a des mors 14 sont coudées en 14e au voisinage de la partie de base 11, afin de présenter une partie avant 14f formant une zone sensiblement cylindrique de diamètre réduit par rapport à celui de la partie de base 11.

A la Fig. 9, la pince 10 et le bloc 26 associé sont montés dans un dispositif de raccordement présentant intérieurement une série de trois alésages étagées 28a, 28b et 28c de diamètres croissants vers l'orifice. Dans l'alésage intermédiaire 28b, est emmanchée une douille 17 qui s'arrête au niveau de la jonction entre les deux alésages 28b et 28c. Dans sa partie resserrée 17d, passe librement la zone sensiblement cylindrique de diamètre réduit de la pince 10, définie par les parties 14f des mors 14.

L'alésage d'entrée 28c du raccord 16 reçoit le bloc 26, de sorte que ce dernier établit l'étanchéité entre le tube 18 et la paroi dudit alésage. Par rapport au système précédemment décrit dans lequel l'étanchéité est établie entre le tube 18 et la douille 17 commandant la fermeture de la pince, est supprimé le joint 27 entre la douille et l'alésage dans lequel elle est emmanchée.

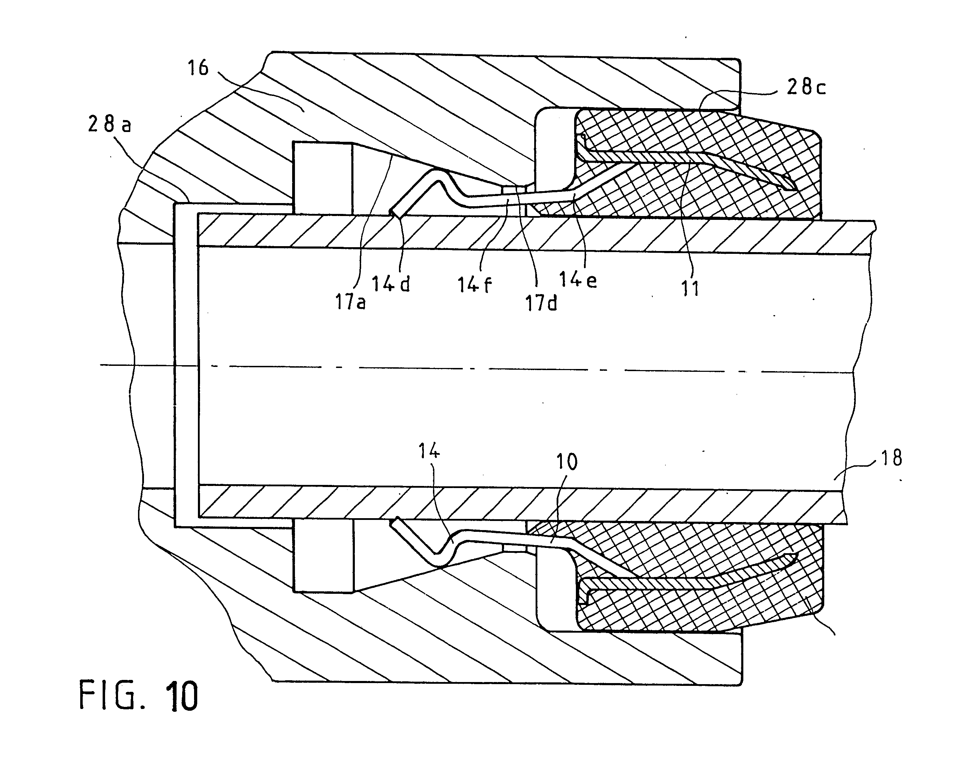

Comparé à cette forme de réalisation de raccord, la variante de la Fig. 10 est remarquable en ce que la partie fonctionnelle de la douille 17, soit la zone tronconique 17a et l'alésage 17b, est formée directement dans le corps 16 du raccord. Ainsi, ce dernier est simplifié à l'extrême puisqu'il n'est plus alors constitué que de deux éléments.

En pratique, pour faciliter le travail d'usinage, les flans à partir desquels on obtient les pinces 10 peuvent être prédécoupés dans des feuilles de tôle de manière à être tous réunis entre eux par des bandes de métal correspondant en largeur et en position angulaire aux pattes 3 à partir desquelles sont formés les ergots 15, et qui sont schématisées à la Fig. 1 par les traits mixtes-fins dans le prolongement des côtés des pattes 3.

La pince selon l'invention est d'un prix de revient très intéressant, de par la simplicité de sa fabrication et le matériau utilisé. D'autre part, le fait de pouvoir déterminer facilement ses caractéristiques mécaniques : flexibilité et rigidité des mors, par une découpe judicieuse des pattes 4 (en jouant sur leur largeur d'ensemble et/ou la divergence plus ou moins prononcée des segments 4a), est également un avantage important, ainsi que le fait de pouvoir associer en une seule pièce et par une simple opération de surmoulage la pince et un bloc en élastomère formant en même temps joint et bague-poussoir.

## Revendications

1) Pince pour dispositif de raccordement instantané de conduit de fluide, notamment de tube semi-rigide, ayant une configuration générale cylindrique avec une partie de base (11) en forme de bague prolongée d'un côté par des mors flexibles (14) dont les extrémités définissent une portée annulaire décalée vers l'extérieur (14b) et présentent intérieurement une arête circulaire (14d), caractérisée en ce qu'elle est obtenue à partir d'un flan en tôle métallique comportant une partie centrale circulaire (1) prolongée à la périphérie par des premières pattes identiques (2) d'axes radiaux, régulièrement écartées et dont les extrémités (5) sont échancrées en arc de cercle, et des secondes pattes (3) identiques d'axes radiaux, régulièrement disposées entre les premières pattes (2) et nettement moins longues et moins larges que celles-ci, ledit flan étant soumis à des opérations d'emboutissage pour, d'une part, réaliser la partie en forme de bague (11) de la pince dans la partie centrale du flan et, d'autre part, les mors (14) à partir des pattes (2) en les galbant transversalement et en les profilant longitudinalement de manière à obtenir une partie sensiblement rectiligne ou languette (14a), une partie coudée pour former la portée (14b) et une partie terminale (14c) inclinée vers le centre, dont le bord interne forme l'arête (14d), lesdites secondes pattes étant destinées à former autour de la pince des ergots (15) dirigés vers l'extérieur.

2) Pince selon la revendication 1, caractérisée en ce que les côtés latéraux (4) de chaque patte (2) forment deux segments (4a, 4b) à partir de la partie centrale du flan, les segments (4a) étant divergents vers l'extérieur, afin que les pattes (2) présentent une zone de plus grande largeur près de leur extrémité (5), correspondant à la partie coudée (14b) des mors (14), de manière à former dans ces derniers une partie flexible près de la base (11) de la pince et une partie beaucoup plus rigide vers leur extrémité.

3) Pince selon la revendication 1 ou 2, caractérisée en ce que le bord externe (12) de sa partie (11) en forme de bague est resserré vers l'intérieur.

4) Pince selon l'une des revendications 1 à 3, caractérisée en ce que lui est associé par surmoulage autour de sa partie (11) et de ses ergots (15) un bloc en élastomère (26) formant bague-poussoir et joint d'étanchéité autour d'un tube (18) inséré dans le raccord.

5) Pince selon l'une des revendications 1 à 3, caractérisée en ce que sa partie de base (11) est sensiblement élargie par rapport à son diamètre d'ouverture défini par les arêtes (14d) de ses mors (14), les parties rectilignes ou languettes (14a) des mors (14) étant coudées (14e), de manière à ce que dans leur partie avant (14f), elles forment une zone sensiblement cylindrique de diamètre réduit par rapport à celui de ladite partie de base (11), et en ce qu'est surmoulé sur la partie de base (11) un bloc en élastomère (26) formant bague-poussoir et joint d'étanchéité autour d'un tube (18) inséré dans le raccord.

6) Dispositif de raccordement instantané comprenant une pince selon l'une des revendications 1 à 3, caractérisé en ce que sont associées à la pince (10) une bague-poussoir (20) et une douille (17) de réception dans le raccord (16), la bague-poussoir épousant par son pourtour interne la forme de la partie de base (11) de la pince et comportant un moyen de coulissement (21) sur le bord en collerette (23) de la douille (17) et un moyen (24) de limitation de coulissement vers l'extérieur.

7) Dispositif de raccordement instantané comprenant une pince selon l'une des revendications 1 à 3, caractérisé en ce qu'à la pince (10) sont associées une bague-poussoir (20) et une douille (17) commandant la fermeture des mors (14), la douille (17) étant entièrement à l'intérieur du raccord (16), et la bague-poussoir (20) épousant par son pourtour interne la forme de la partie de base (11) de la pince et en étant rendue solidaire, la bague-poussoir (20) présentant en outre une partie avant (20a) engagée, apte à coulisser, dans l'alésage du raccord à la suite de la douille (17).

8) Dispositif de raccordement instantané comprenant une pince selon l'une des revendications 1 à 3, caractérisé en ce que la zone tronconique (17a) commandant la fermeture de la pince (10) est formée directement dans le corps (16), une rondelle (17′) assurant la séparation entre l'espace réservé à la pince (10) et une chambre logeant un joint (19) assurant l'étanchéité autour d'un tube (18) inséré dans le raccord.

9) Dispositif de raccordement instantané comprenant une pince selon l'une des revendications 1 à 3, caractérisé en ce que sont formées directement dans le corps (16) la zone tronconique (17a) commandant la fermeture de la pince (10) et la séparation entre l'espace réservé à la pince (10) et une chambre logeant un joint (19) assurant l'étanchéité autour d'un tube (18) inséré dans le raccord.

10) Dispositif de raccordement instantané comprenant une pince selon la revendication 4 ou 5, caractérisé en ce que ledit bloc en élastomère (26) établit l'étanchéité entre l'alésage d'entrée (28c) et un tube (18) introduit dans le dispositif.

11) Dispositif de raccordement instantané selon la revendication 10, caractérisé en ce que la zone tronconique (22a) commandant la fermeture de la pince (10) est formée directement dans le corps (16).

12) Dispositif de raccordement instantané selon l'une des revendications 6 à 11, caractérisé en ce que la paroi de la zone tronconique (17a) commandant la fermeture de la pince (10) présente une rainure circulaire (17c) de verrouillage des mors en position d'accrochage sur un tube (18).

FIG. 1

FIG. 2

FIG. 7

FIG. 3

FIG. 4

FIG. 5

FIG. 6

EP 0 378 035 A1

FIG. 8

FIG. 9

EP 0 378 035 A1

FIG. 10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 294 948  (BARNETT) <br> * Fig. * | 1,2 | F 16 L   37/08 |
| A | | 6,7,10 | |
| | --- | | |
| A | DE-U-8 660 033  (ARMATUREN FABRIK H. VOSS GmbH) <br> * Fig. * | 1,4,5,7 | |
| | --- | | |
| A | US-A-4 676 533  (GERONADE) <br> * Fig. * | 1,3,10 | |
| | ----- | | |

**DOMAINES TECHNIQUES RECHERCHES (Int. Cl.5)**

F 16 L

Le présent rapport a été établi pour toutes les revendications

| Lieu de la recherche | Date d'achèvement de la recherche | Examinateur |
|---|---|---|
| LA HAYE | 30-03-1990 | HUBEAU M.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)